# EUROPEAN PATENT APPLICATION

(11) **EP 3 783 357 A1**
(43) Date of publication of application: **24.02.2021**
(21) Application number: 19787865.5
(22) Date of filing: 12.04.2019
(51) Int. Cl.: G01N 29/07

(54) **TRAIN COMPONENT CRACK DAMAGE DETECTION METHOD AND SYSTEM BASED ON LAMB WAVE IMAGING**

(30) Priority: 17.04.2018 CN 201810351382
(71) Applicant: Jiangsu Bide Science and Technology Co., Ltd., Jiangyin, Jiangsu 214404 (CN)
(72) Inventor: CAI, Guoqiang, Jiangyin, Jiangsu 214404 (CN); WANG, Jianqun, Jiangyin, Jiangsu 214404 (CN); HE, Ming, Jiangyin, Jiangsu 214404 (CN)
(74) Representative: Ipside
(86) International application number: PCT/CN2019/082493
(87) International publication number: WO 2019/201178

(57) **Abstract**

The invention provides a folding and unfolding mechanism for front and rear leg assemblies of a frame and a child safety seat, and belongs to the field of child seats. The folding and unfolding mechanism comprises a folding and unfolding control assembly and a front-rear leg rotating assembly. The front-rear leg rotating assembly comprises a rotating shaft arranged on a seat body and used for rotatably connecting a front leg assembly to the seat body, a rear leg assembly supporting rod used for connecting a rear leg assembly to the seat body, and a rear leg assembly rotating rod arranged on the front leg assembly and used for connecting the rear leg assembly to the front leg assembly, so that the rear leg assembly can rotate reversely when the front leg assembly rotates around the rotating shaft. The child safety seat comprises a seat body, a front leg assembly hinged to the seat body, a rear leg assembly hinged to the front leg assembly, and the folding and unfolding mechanism for front and rear leg assemblies of a frame. According to the folding and unfolding mechanism of the invention, the rear leg assembly can be folded reversely when the front leg assembly rotates to be folded, that is, the front leg assembly and the rear leg assembly are folded on two sides of the seat body, so that the problem of the prior art that the seat body cannot be stably clamped on the front and rear leg assemblies because the front and rear leg assemblies are folded on the same side is solved.

## Description

### Technical Field

The invention relates to the technical field of damage detection, in particular to a method and system for detecting crack damage of a train component based on Lamb wave imaging.

### Background of the Invention

With the continuous improvement of structural safety and reliability requirements, the detection and diagnosis of structural damage in key parts has attracted more and more attention, especially for crack damage detection. The Lamb wave method for structural damage monitoring is a common technology. It is sensitive to small damage such as cracks in the structure without a need to disassemble the structure, can monitor the health condition of the structure in real time, and has wide application prospects. Lamb wave is a kind of guided wave, which has the characteristics of slow attenuation, long propagation distance and sensitivity to damage. In the process of Lamb wave propagation in the component, if the matrix structure changes such as delamination, impurities, cracks and so on, the phenomena of transmission, refraction, reflection, etc. can occur, and a received signal can obviously change. The collected signals are analyzed, and compared with characteristic curves of a theoretical signal, and relevant parameters such as existence, position, size and so on of defects can be judged, so that nondestructive detection and evaluation of components are realized.

At present, most Lamb wave-based structural damage monitoring methods excite a piezoelectric element with a specific signal to excite a Lamb signal into a detection structure, one (or a group of) piezoelectric sensor at another position receive the Lamb signal, the received Lamb signal is analyzed to extract a characteristic damage signal, and structural state information is obtained by calculation. Ellipse location method is a common damage location judgment method. The method regards a driver and a sensor as two focuses of the ellipse, and the damage point is on the circumference of ellipse with the driver and the sensor as the focuses; another group of exciters and sensors are taken to draw another ellipse, so that the estimation of the damage position is converted into the question of finding the intersection point of the ellipses, and it is possible to find the damage position as long as two or more ellipses exist. However, the existing Lamb wave-based structural damage monitoring methods can not overcome environmental noise, measurement errors, errors of time delay due to calculation method and other factors, and especially can not solve the boundary damage problem.

### Summary of the Invention

Therefore, the embodiment of the invention provides a method and system for detecting crack damage of a train component based on Lamb wave imaging.

According to an aspect of the embodiment of the invention, the invention provides a method for detecting crack damage of a train component based on Lamb wave imaging, which is characterized by comprising: step 1, arranging a cellular sensor network device on a detection structure of a train component to be detected, wherein the cellular sensor network device comprises a plurality of piezoelectric sensors, and each piezoelectric sensor is used as a loading point of excitation signals and/or an acquisition point of response signals; step 2, exciting an excitation signal on a healthy detection structure at a first time interval by using a probe at the loading point of excitation signals, and generating a Lamb wave in the detection structure, wherein each acquisition point of response signals acquires a first Lamb wave response signal for the Lamb wave; step 3, obtaining the first Lamb wave response signal, establishing a dispersion relation of the Lamb wave along with the change of a propagation angle in an anisotropic composite laminate of the detection structure according to the Mindlin plate theory, and obtaining a theoretical speed distribution of the Lamb wave as reference information; step 4, exciting an excitation signal on the detection structure to be detected at a second time interval by using a probe at the loading point of excitation signals, and generating a Lamb wave in the detection structure, wherein each acquisition point of response signals acquires a second Lamb wave response signal for the Lamb wave; step 5, analyzing the second Lamb wave response signal in a time domain and a frequency domain, and extracting characteristic information; taking the second Lamb wave response signal as a damage signal and the first Lamb wave response signal as a reference signal, and calculating a signal difference coefficient (SDC) value corresponding to each acquisition point of response signals on the basis of the damage signal, the reference signal, the reference information and the characteristic information; step 6, reconstructing a region where the crack damage may exist in the detection structure according to the obtained SDC value and the probability imaging principle; and step 7, judging a crack direction based on the SDC value, correcting the SDC value in the crack direction for strengthening the reconstructed image information in the crack direction, and reconstructing a crack damage image by adopting the probability imaging principle; and drawing an SDC distribution map, and evaluating the length of the crack based on the SDC distribution map.

Optionally, a plurality of piezoelectric sensors are arranged in a honeycomb array comprising at least one regular hexagonal basic detection unit; each piezoelectric sensor is a node in the honeycomb array and serves as a loading point of excitation signals and/or an acquisition point of response signals; the basic detection unit comprises six piezoelectric sensors arranged in a regular hexagon; and a microcontroller is embedded in the piezoelectric sensor, and the piezoelectric sensor is used as a Lamb wave excitation signal device and a Lamb wave signal receiver.

Optionally, in the step 5, the method comprises analyzing the second Lamb wave response signal in the time domain and the frequency domain by adopting the wavelet transform algorithm, and extracting the characteristic information for measuring actual propagation time and speed of the Lamb wave in the detection structure to be detected.

Optionally, in the step 5, the method comprises taking the first Lamb wave response signal as a base signal and subtracting the second Lamb wave response signal from the first Lamb wave response signal to obtain a damage scattering signal; and superposing and amplifying the damage scattering signal energy by a focusing method to improve the signal-to-noise ratio of the damage scattering signal, and subjecting the damage scattering signal to time reversal processing.

Optionally, the method comprises carrying out the time reversal processing on the second Lamb wave response signal containing defect information, and loading the processed second Lamb wave response signal as a new wave source to the loading point of excitation signals for emission, so as to excite an excitation signal on the detection structure to be detected, realize secondary focusing of the Lamb wave at a defect position, and establish an amplitude focusing map for imaging and identifying a damage position and region.

According to another aspect of the present invention, the invention provides a system for detecting crack damage of a train component based on Lamb wave imaging, comprising: a cellular sensor network device and a data acquisition and processing device, wherein the cellular sensor network device comprises a plurality of piezoelectric sensors, and each piezoelectric sensor is used as a loading point of excitation signals and/or an acquisition point of response signals; and the cellular sensor network device is arranged on a detection structure of a train component to be detected; the data acquisition and processing device comprises: a first signal excitation module used for exciting an excitation signal on a healthy detection structure at a first time interval by using a probe at a loading point of excitation signals, and generating a Lamb wave in the detection structure, wherein each acquisition point of response signals acquires a first Lamb wave response signal for the Lamb wave; a reference information acquisition module used for obtaining the first Lamb wave response signal, establishing a dispersion relation of the Lamb wave along with the change of a propagation angle in an anisotropic composite laminate of the detection structure according to the Mindlin plate theory, and obtaining a theoretical speed distribution of the Lamb wave as reference information; a second signal excitation module used for exciting an excitation signal on the detection structure to be detected at a second time interval by using a probe at the loading point of excitation signals, and generating a Lamb wave in the detection structure, wherein each acquisition point of response signals acquires a second Lamb wave response signal for the Lamb wave; a damage information acquisition module used for analyzing the second Lamb wave response signal in a time domain and a frequency domain, and extracting characteristic information; taking the second Lamb wave response signal as a damage signal and the first Lamb wave response signal as a reference signal, and calculating a signal difference coefficient (SDC) value corresponding to each acquisition point of response signals on the basis of the damage signal, the reference signal, the reference information and the characteristic information; and an imaging analysis module used for reconstructing a region where the crack damage may exist in the detection structure according to the obtained SDC value and the probability imaging principle; judging a crack direction based on the SDC value, correcting the SDC value in the crack direction for strengthening the reconstructed image information in the crack direction, and reconstructing a crack damage image by adopting the probability imaging principle; and drawing an SDC distribution map, and evaluating the length of the crack based on the SDC distribution map.

Optionally, a plurality of piezoelectric sensors are arranged in a honeycomb array comprising at least one regular hexagonal basic detection unit; each piezoelectric sensor is a node in the honeycomb array and serves as a loading point of excitation signals and/or an acquisition point of response signals; the basic detection unit comprises six piezoelectric sensors arranged in a regular hexagon; and a microcontroller is embedded in the piezoelectric sensor, and the piezoelectric sensor is used as a Lamb wave excitation signal device and a Lamb wave signal receiver.

Optionally, the damage information acquisition module is used for analyzing the second Lamb wave response signal in the time domain and the frequency domain by adopting the wavelet transform algorithm, and extracting the characteristic information for measuring actual propagation time and speed of the Lamb wave in the detection structure to be detected.

Optionally, the damage information acquisition module is used for taking the first Lamb wave response signal as a base signal and subtracting the second Lamb wave response signal from the first Lamb wave response signal to obtain a damage scattering signal; and superposing and amplifying the damage scattering signal energy by a focusing method to improve the signal-to-noise ratio of the damage scattering signal, and subjecting the damage scattering signal to time reversal processing.

Optionally,the second signal excitation module is used for carrying out the time reversal processing on the second Lamb wave response signal containing defect information, and loading the processed second Lamb wave response signal as a new wave source to the loading point of excitation signals for emission, so as to excite an excitation signal on the detection structure to be detected, realize secondary focusing of the Lamb wave at a defect position, and establish an amplitude focusing map for imaging and identifying a damage position and region.

According to the method and system for detecting crack damage of a train component based on Lamb wave imaging of the invention, a cellular sensor network device is arranged on a detection structure of a train component to be detected, and a piezoelectric sensor in the cellular sensor network device is used as a loading point of excitation signalss and/or an acquisition point of response signalss. The method comprises taking a second Lamb wave response signal as a damage signal and a first Lamb wave response signal as a reference signal, and calculating a signal difference coefficient (SDC) value corresponding to each acquisition point of response signals; and reconstructing a crack damage image by adopting the probability imaging principle, drawing an SDC distribution map, evaluating the length of the crack based on the SDC distribution map, and carrying out focusing, time reversal and other processing on the response signal. The invention can overcome the influence of environmental noise, measurement error, time delay and other factors. The invention has high calculation accuracy on signal energy and low misjudgment rate on damage judgment, and can reduce "blind areas" in detection, enable the damage monitoring range to be larger, and improve the accuracy of damage judgment.

Additional aspects and advantages of embodiments of the invention will be set forth in part in the following description, and will be obvious from the description, or may be learned by practice of the invention.

### Brief description of the Drawings

In order to more clearly illustrate technical solutions in the embodiments of the present invention or the prior art, reference will now be made to the accompanying drawings for use in the embodiments or descriptions of prior art. It is apparent that the drawings in the following description are only a few embodiments of the invention. For a person skilled in the art, other drawings can be obtained from these drawings without involving any inventive effort.
Fig. 1 is a flow diagram of an embodiment of a method for detecting crack damage of a train component based on Lamb wave imaging according to the present invention;
Fig. 2 is a schematic view showing a cellular array arrangement of a cellular sensor network device in an embodiment of the method for detecting crack damage of a train component based on Lamb wave imaging according to the present invention;
Figs. 3A and 3B are schematic views for comparing the effects of continuous wavelet transform on Lamb wave signal reconstruction;
Fig. 4 is a schematic view of modules in an embodiment of a system for detecting crack damage of a train component based on Lamb wave imaging according to the present invention.

### Detailed Description of Embodiments

Various exemplary embodiments of the present invention will now be described in detail with reference to the accompanying drawings. It should be noted that the relative arrangement of parts and steps, numerical expressions and numerical values set forth in these embodiments do not limit the scope of the invention unless specifically stated otherwise.

At the same time, it should be understood that the dimensions of the various parts illustrated in the figures have not been drawn to scale in order to facilitate the description.

The following description of at least one exemplary embodiment is merely exemplary in fact and is in no way intended to limit the invention and its application or uses.

Techniques, methods and apparatus known to those of ordinary skill in the relevant art may not be discussed in detail, but should be considered part of the description where appropriate.

It should be noted that like numbers and letters refer to like items in the following figures, and thus, once an item is defined in one figure, it need not be further discussed in subsequent figures.

Embodiments of the invention may be applied to a computer system/server that may operate with numerous other general purpose or special purpose computing system environments or configurations. Examples of well-known computing systems, environments, and/or configurations that may be suitable for use with the computer system/server include, but are not limited to, personal computer systems, server computer systems, thin clients, thick clients, hand-held or laptop devices, microprocessor-based systems, set-top boxes, programmable consumer electronics, network personal computers, minicomputer systems, mainframe computer systems, and distributed cloud computing technology environments that include any of the above, and the like.

The computer system/server may be described in the general context of computer system-executable instructions, such as program modules, being executed by the computer system. Generally, the program modules may include routines, programs, object programs, components, logic, data structures, etc. that perform particular tasks or implement particular abstract data types. The computer system/server may be implemented in a distributed cloud computing environment in which tasks are performed by remote processing devices that are linked by a communication network. In the distributed cloud computing environment, the program modules may be located on local or remote computing system storage media including storage devices.

Hereinafter, "first" and "second" are used only to describe differences in description, and have no other specific meanings.

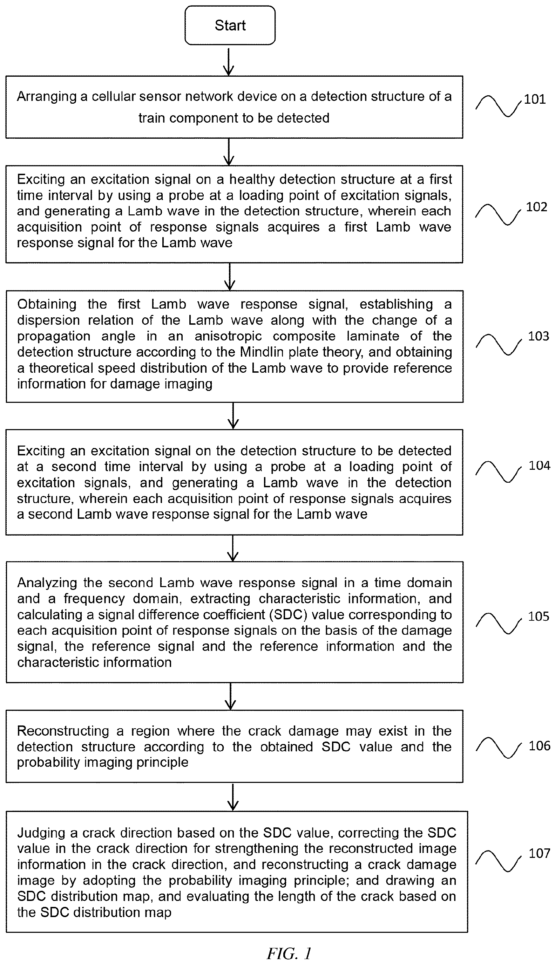

Fig. 1 is a flow diagram of an embodiment of a method for detecting crack damage of a train component based on Lamb wave imaging according to the present invention, and in the Fig. 1:
Step 101, arranging a cellular sensor network device on a detection structure of a train component to be detected. The train components may be key components or the like of a high-speed train. The cellular sensor network device comprises a plurality of piezoelectric sensors, and each piezoelectric sensor is used as a loading point of excitation signals and an acquisition point of response signals.
Step 102, exciting an excitation signal on a healthy detection structure at a first time interval by using a probe at the loading point of excitation signals, and generating a Lamb wave in the detection structure. Each acquisition point of response signals acquires a first Lamb wave response signal for the Lamb wave.
   Lamb wave is an elastic guided wave propagating in a solid structure under free boundary conditions, which has characteristics of slow attenuation and a long range of propagation and is very sensitive to small damage in the structure. The excitation signal may be amplified by a charge amplifier and loaded into a piezoelectric sensor to excite a Lamb wave in the detection structure. Lamb wave response signals of all excitation/sensing channels when the detection structure is healthy are acquired to serve as reference signals of the detection structure.
Step 103, obtaining the first Lamb wave response signal, establishing a dispersion relation of the Lamb wave along with the change of a propagation angle in an anisotropic composite laminate of the detection structure according to the Mindlin plate theory, and obtaining a theoretical speed distribution of the Lamb wave as reference information.
   Mindlin plate theory is commonly referred to as the first-order shear deformation theory of plates. Mindlin plate theory assumes that the plate displacement varies linearly in the plate thickness direction, but the plate thickness does not change, and it is assumed that the normal stress in the plate thickness direction, i.e. the plane stress assumption, is ignored. The dispersion relation of Lamb wave along with the change of a propagation angle in an anisotropic composite laminates can be established according to the Mindlin plate theory, and a theoretical speed distribution of the Lamb wave can be obtained, which can provide reference information for damage imaging.
Step 104, exciting an excitation signal on the detection structure to be detected at a second time interval by using a probe at the loading point of excitation signals, and generating a Lamb wave in the detection structure. Each acquisition point of response signals acquires a second Lamb wave response signal for the Lamb wave.
Step 105, analyzing the second Lamb wave response signal in a time domain and a frequency domain, and extracting characteristic information; taking the second Lamb wave response signal as a damage signal and the first Lamb wave response signal as a reference signal, and calculating a signal difference coefficient (SDC) value corresponding to each acquisition point of response signals on the basis of the damage signal, the reference signal, the reference information and the characteristic information; and
   taking the acquired second Lamb wave response signal as a damage signal, acquiring the first Lamb wave response signal as a reference signal according to a healthy plate structure, and calculating SDC values of all excitation/sensing channels.
   The Lamb wave signal excited and received by the piezoelectric sensor element can be analyzed in the time-frequency domain by using the wavelet transform to extract characteristic information, measure the actual propagation time and group velocity of the Lamb wave in the monitored part, and compare them with the reference information. According to the characteristics of Lamb wave signal propagation, damage scattering signal energy is superposed and amplified by a focusing method, so that the signal-to-noise ratio of the signal is improved. The time reversal method is used for carrying out adaptive focusing on the wave source to reconstruct a signal propagation fluctuation diagram, and the damage position and region are displayed by signal focusing.
Step 106, reconstructing a region where the crack damage may exist in the detection structure according to the obtained SDC value and the probability imaging principle.

According to the obtained SDC value and the reflection and scattering effects of crack damage on Lamb wave monitoring signals, the reconstructed image information in the crack direction is strengthened by correcting the signal difference coefficient SDC value in the crack direction in the damaged region, so as to realize the image reconstruction of the crack damage and reconstruct a crack damage image by adopting the probability imaging principle.

According to the fundamental principle of Lamb wave propagation, when the propagation medium is interrupted or discontinuous, most Lamb wave signals are difficult to continue to propagate forward due to being hindered. Even if the crack width is narrow, the Lamb wave in the propagation direction is obviously attenuated so long as the length of the crack is greater than the wavelength of the Lamb wave. The difference between the statistical characteristics of the damage signal and the reference signal can be characterized by the signal difference coefficient SDC, and the magnitude of the SDC value reflects the damage degree and distance.

According to the reflection and scattering effects of crack damage on the Lamb wave monitoring signals, the reconstructed image information in the crack direction is strengthened by correcting the signal difference coefficient (SDC) value in the crack direction in the damaged region, so as to realize the image reconstruction of crack damage and estimate a crack length from the SDC distribution map at a receiving end.

According to the obtained SDC value, a region where the crack damage may exist in the plate can be reconstructed by utilizing a traditional probability imaging principle; and the difference value of the SDC value is calculated according to a path where the piezoelectric sensor passes through the damaged region so as to judge the crack direction. The SDC value in the crack judging direction can be corrected to be 1, and the crack damage image is reconstructed again by adopting the traditional probability imaging principle. The SDC values of the six excitation/sensing channels are arranged into a regular hexagon, and the probability distribution graphs corresponding to all sensing paths are superposed to obtain the damage distribution probability of any point in the detection region and reconstruct the damage image of the crack.

Step 107, judging a crack direction based on the SDC value, correcting the SDC value in the crack direction for strengthening the reconstructed image information in the crack direction, and reconstructing a crack damage image by adopting the probability imaging principle; and drawing an SDC distribution map, and evaluating the length of the crack based on the SDC distribution map. The SDC distribution map can be drawn using a variety of methods known in the art to evaluate the length of the crack.

According to the characteristics of Lamb wave signal propagation, damage scattering signal energy is superposed and amplified by a focusing method, so that the signal-to-noise ratio of the signal is improved; the time reversal method is used for carrying out adaptive focusing on the wave source to reconstruct a signal propagation fluctuation diagram, and the damage position and region are displayed by signal focusing; and the crack damage length is calculated according to the number and the distance of image pixel points exceeding a set threshold value on a monitoring path of the judged crack direction according to the imaging result.

In the Lamb-based imaging process, the damage scattering signal energy is superposed and amplified by a focusing method, so that the signal-to-noise ratio of the signal is improved. In the process of damage localization, the time reversal method is used for carrying out adaptive focusing on the wave source to reconstruct a signal propagation fluctuation diagram, and the damage position and region are displayed by signal focusing. In the process of crack size evaluation, according to the reflection and scattering effects of crack damage on the Lamb wave monitoring signals, the reconstructed image information in the crack direction is strengthened by correcting the signal difference coefficient SDC value in the crack direction in the damaged region, so as to realize the image reconstruction of crack damage and estimate a crack length from the SDC distribution map at a receiving end.

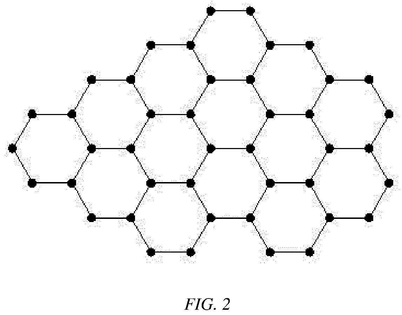

In an embodiment, as shown in FIG. 2, a plurality of piezoelectric sensors are arranged in a honeycomb array comprising at least one regular hexagonal basic detection unit; and each piezoelectric sensor is a node in the honeycomb array and serves as a loading point of excitation signals and/or an acquisition point of response signals; The basic detection unit comprises six piezoelectric sensors arranged in a regular hexagon; a microcontroller is embedded in the piezoelectric sensor, and the piezoelectric sensor is used as a Lamb wave excitation signal device and a Lamb wave signal receiver.

A waveform generator is connected with a power amplifier by a wire, the power amplifier is connected with an exciter in a monitoring path formed by the wire and a cellular sensor network device arranged on the structure to be detected. The sensor in the monitoring path is connected with a charge amplifier by the wire, and the charge amplifier is connected with a data acquisition and processing device by the wire.

According to the size of the detection region, a regular hexagonal honeycomb array is formed by using a certain number of piezoelectric sensors embedded with microcontrollers to cover the surface of the part to be detected. As an excitation, the arrangement number of the cellular sensor networks can be determined according to the actual situation of the structure to be monitored. Theoretically, six piezoelectric elements can form a monitoring unit. When there is a large structure, scanning can be carried out by closely arranging a plurality of cellular sensor networks according to the situation.

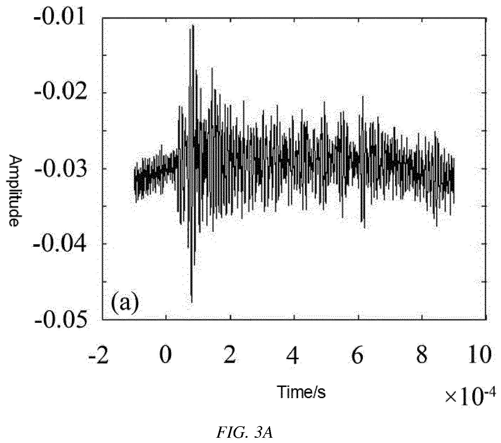

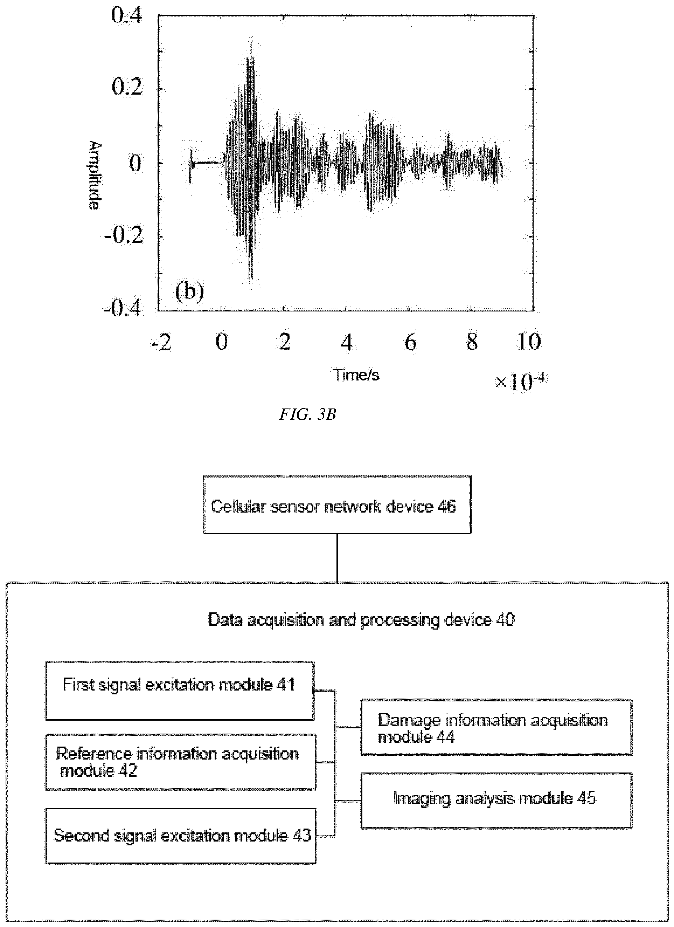

Wavelet transform (WT) can provide a frequency-dependent "time-frequency" window, which is an ideal tool for signal time-frequency analysis and processing. The second Lamb wave response signal in a time domain and a frequency domain is analyzed by the wavelet transform algorithm for extracting the characteristic information and measuring the actual propagation time and speed of Lamb wave in the detection structure to be detected. In the process of extracting characteristic information of a member to be detected, Lamb wave signals excited and received by a piezoelectric sensing element are analyzed in a time-frequency domain by using the wavelet transform, as shown in Figs. 3A and 3B.

The method comprises taking the first Lamb wave response signal as a base signal and subtracting the second Lamb wave response signal from the first Lamb wave response signal to obtain a damage scattering signal; and superposing and amplifying the damage scattering signal energy by a focusing method to improve the signal-to-noise ratio of the damage scattering signal, and subjecting the damage scattering signal to time reversal processing. The method comprises carrying out the time reversal processing on the second Lamb wave response signal containing defect information, and loading the processed second Lamb wave response signal as a new wave source to the loading point of excitation signals for emission, so as to excite an excitation signal on the detection structure to be detected, realize secondary focusing of the Lamb wave at a defect position, and establish an amplitude focusing map for imaging and identifying a damage position and region.

In an embodiment, cellular sensor network devices are firstly arranged on a part to be detected to divide the monitoring region into a plurality of basic monitoring units, Lamb waves are excited and received by nodes of the cellular sensor network device, and a signal propagation fluctuation diagram is reconstructed by focusing and time reversal methods to display a damage position and region are through signal focusing. According to the reflection and scattering effects of the Lamb wave, the reconstructed image information in the crack direction is strengthened by correcting the signal difference coefficient value in the crack direction in the damaged region, and a crack length is estimated from the SDC distribution map at a receiving end.

As shown in Fig. 4, the invention provides a system for detecting crack damage of a train component based on Lamb wave imaging, comprising a cellular sensor network device 46 and a data acquisition and processing device 40. The data acquisition and processing device 40 includes a first signal excitation module 41, a reference information acquisition module 42, a second signal excitation module 43, a damage information acquisition module 44 and an imaging analysis module 44.

The cellular sensor network device 46 includes a plurality of piezoelectric sensors, and each piezoelectric sensor is used as a loading point of excitation signals and an acquisition point of response signals. A cellular sensor network device 46 is arranged on a detection structure of a train component to be detected. A plurality of piezoelectric sensors are arranged in a honeycomb array comprising at least one regular hexagonal basic detection unit. Each piezoelectric sensor is a node in the honeycomb array and serves as a loading point of excitation signals and/or an acquisition point of response signals. The basic detection unit comprises six piezoelectric sensors arranged in a regular hexagon. A microcontroller is embedded in the piezoelectric sensor, and the piezoelectric sensor is used as a Lamb wave excitation signal device and a Lamb wave signal receiver.

The first signal excitation module 41 excites an excitation signal on a healthy detection structure at a first time interval by using a probe at the loading point of excitation signals, and generating a Lamb wave in the detection structure, wherein each acquisition point of response signals acquires a first Lamb wave response signal for the Lamb wave. The reference information acquisition module 43 obtains the first Lamb wave response signal, establishes a dispersion relation of the Lamb wave along with the change of a propagation angle in an anisotropic composite laminate of the detection structure according to the Mindlin plate theory, and obtains a theoretical speed distribution of the Lamb wave as reference information.

The second signal excitation module 43 excites an excitation signal on the detection structure to be detected at a second time interval by using a probe at the loading point of excitation signals, and generates a Lamb wave in the detection structure, wherein each acquisition point of response signals acquires a second Lamb wave response signal for the Lamb wave. The damage information acquisition module 44 analyzes the second Lamb wave response signal in a time domain and a frequency domain, and extracts characteristic information. The damage information acquisition module 44 takes the second Lamb wave response signal as a damage signal and the first Lamb wave response signal as a reference signal, and calculates a signal difference coefficient (SDC) value corresponding to each acquisition point of response signals on the basis of the damage signal, the reference signal, the reference information and the characteristic information.

The imaging analysis module 45 reconstructs a region where the crack damage may exist in the detection structure according to the obtained SDC value and the probability imaging principle. The imaging analysis module 45 judges the crack direction based on the SDC value, corrects the SDC value in the crack direction for strengthening the reconstructed image information in the crack direction, and reconstructs a crack damage image by adopting the probability imaging principle. The imaging analysis module 45 draws an SDC distribution map, and evaluates the length of the crack based on the SDC distribution map.

The damage information acquisition module 44 analyzes the second Lamb wave response signal in the time domain and the frequency domain by adopting the wavelet transform algorithm, and extracts the characteristic information for measuring actual propagation time and speed of the Lamb wave in the detection structure to be detected. The damage information acquisition module 44 takes the first Lamb wave response signal as a base signal, and subtracts the second Lamb wave response signal from the first Lamb wave response signal to obtain a damage scattering signal The damage information acquisition module 44 superposes and amplifies the damage scattering signal energy by a focusing method to improve the signal-to-noise ratio of the damage scattering signal, and subjects the damage scattering signal to time reversal processing.

The second signal excitation module 43 carries out the time reversal processing on the second Lamb wave response signal containing defect information, and loads the processed second Lamb wave response signal as a new wave source to the loading point of excitation signals for emission, so as to excite an excitation signal on the detection structure to be detected, realize secondary focusing of the Lamb wave at a defect position, and establish an amplitude focusing map for imaging and identifying a damage position and region.

According to the method and system for detecting crack damage of a train component based on Lamb wave imaging provided by the above embodiments, a cellular sensor network device is arranged on a detection structure of a train component to be detected, and a piezoelectric sensor in the cellular sensor network device is used as a loading point of excitation signalss and/or an acquisition point of response signalss. The method comprises taking a second Lamb wave response signal as a damage signal and a first Lamb wave response signal as a reference signal, and calculating a signal difference coefficient (SDC) value corresponding to each acquisition point of response signals; and reconstructing a crack damage image by adopting the probability imaging principle, drawing an SDC distribution map, evaluating the length of the crack based on the SDC distribution map, and carrying out focusing, time reversal and other processing on the response signal. The invention can overcome the influence of environmental noise, measurement error, time delay and other factors. The invention has high calculation accuracy on signal energy and low misjudgment rate on damage judgment, and can reduce "blind areas" in detection, enable the damage monitoring range to be larger, and improve the accuracy of damage judgment.

The method, device and apparatus of the present invention may be implemented in many ways. For example, the method, device, and apparatus of the present invention may be implemented in software, hardware, firmware, or any combination of software, hardware, firmware. The above order of steps for the method is for illustration only and the steps of the method of the present invention are not limited to the order specifically described above unless specifically stated otherwise. Furthermore, in some embodiments, the present invention may also be embodied as programs recorded in a recording medium, the programs including machine-readable instructions for implementing the method according to the present invention. Thus, the present invention also covers a recording medium storing a program for executing the method according to the present invention.

The description of the invention has been presented for purposes of giving examples and description, and is not intended to be exhaustive or to limit the invention to the form disclosed. Many modifications and variations will be apparent to those skilled in the art. The embodiments are chosen and described in order to best explain the principles of the invention and its practical application, and to enable those skilled in the art to understand the invention and design various embodiments with various modifications suited to particular use.

## Claims

1. A method for detecting crack damage of a train component based on Lamb wave imaging, **characterized by** comprising:
step 1, arranging a cellular sensor network device on a detection structure of a train component to be detected, wherein the cellular sensor network device comprises a plurality of piezoelectric sensors, and each piezoelectric sensor is used as a loading point of excitation signals and/or an acquisition point of response signals;
step 2, exciting an excitation signal on a healthy detection structure at a first time interval by using a probe at the loading point of excitation signals, and generating a Lamb wave in the detection structure, wherein each acquisition point of response signals acquires a first Lamb wave response signal for the Lamb wave;
step 3, obtaining the first Lamb wave response signal, establishing a dispersion relation of the Lamb wave along with the change of a propagation angle in an anisotropic composite laminate of the detection structure according to the Mindlin plate theory, and obtaining a theoretical speed distribution of the Lamb wave as reference information;
step 4, exciting an excitation signal on the detection structure to be detected at a second time interval by using a probe at the loading point of excitation signals, and generating a Lamb wave in the detection structure, wherein each acquisition point of response signals acquires a second Lamb wave response signal for the Lamb wave;
step 5, analyzing the second Lamb wave response signal in a time domain and a frequency domain, and extracting characteristic information; taking the second Lamb wave response signal as a damage signal and the first Lamb wave response signal as a reference signal, and calculating a signal difference coefficient (SDC) value corresponding to each acquisition point of response signals on the basis of the damage signal, the reference signal, the reference information and the characteristic information;
step 6, reconstructing a region where the crack damage may exist in the detection structure according to the obtained SDC value and the probability imaging principle; and
step 7, judging a crack direction based on the SDC value, correcting the SDC value in the crack direction for strengthening the reconstructed image information in the crack direction, and reconstructing a crack damage image by adopting the probability imaging principle; and drawing an SDC distribution map, and evaluating the length of the crack based on the SDC distribution map.

2. The method according to claim 1, **characterized in that**
a plurality of piezoelectric sensors are arranged in a honeycomb array comprising at least one regular hexagonal basic detection unit; and each piezoelectric sensor is a node in the honeycomb array and serves as a loading point of excitation signals and/or an acquisition point of response signals;
the basic detection unit comprises six piezoelectric sensors arranged in a regular hexagon; and
a microcontroller is embedded in the piezoelectric sensor, and the piezoelectric sensor is used as a Lamb wave excitation signal device and a Lamb wave signal receiver.

3. The method according to claim 1, **characterized by**
in the step 5, analyzing the second Lamb wave response signal in the time domain and the frequency domain by adopting the wavelet transform algorithm, and extracting the characteristic information for measuring actual propagation time and speed of the Lamb wave in the detection structure to be detected.

4. The method according to claim 1, **characterized by**
in the step 5, taking the first Lamb wave response signal as a base signal, and subtracting the second Lamb wave response signal from the first Lamb wave response signal to obtain a damage scattering signal;
superposing and amplifying the damage scattering signal energy by a focusing method to improve the signal-to-noise ratio of the damage scattering signal, and subjecting the damage scattering signal to time reversal processing.

5. The method according to claim 1, **characterized by**
carrying out the time reversal processing on the second Lamb wave response signal containing defect information, and loading the processed second Lamb wave response signal as a new wave source to the loading point of excitation signals for emission, so as to excite an excitation signal on the detection structure to be detected, realize secondary focusing of the Lamb wave at a defect position, and establish an amplitude focusing map for imaging and identifying a damage position and region.

6. A system for detecting crack damage of a train component based on Lamb wave imaging, **characterized by** comprising:
a cellular sensor network device and a data acquisition and processing device;
wherein the cellular sensor network device comprises a plurality of piezoelectric sensors, and
each piezoelectric sensor is used as a loading point of excitation signals and/or an acquisition point of response signals; and the cellular sensor network device is arranged on a detection structure of a train component to be detected;
the data acquisition and processing device, comprising:
a first signal excitation module used for exciting an excitation signal on a healthy detection structure at a first time interval by using a probe at a loading point of excitation signals, and generating a Lamb wave in the detection structure, wherein each acquisition point of response signals acquires a first Lamb wave response signal for the Lamb wave;
a reference information acquisition module used for obtaining the first Lamb wave response signal, establishing a dispersion relation of the Lamb wave along with the change of a propagation angle in an anisotropic composite laminate of the detection structure according to the Mindlin plate theory, and obtaining a theoretical speed distribution of the Lamb wave as reference information;
a second signal excitation module used for exciting an excitation signal on the detection structure to be detected at a second time interval by using a probe at the loading point of excitation signals, and generating a Lamb wave in the detection structure, wherein each acquisition point of response signals acquires a second Lamb wave response signal for the Lamb wave;
a damage information acquisition module used for analyzing the second Lamb wave response signal in a time domain and a frequency domain, and extracting characteristic information; taking the second Lamb wave response signal as a damage signal and the first Lamb wave response signal as a reference signal, and calculating a signal difference coefficient (SDC) value corresponding to each acquisition point of response signals on the basis of the damage signal, the reference signal, the reference information and the characteristic information; and
an imaging analysis module used for reconstructing a region where the crack damage may exist in the detection structure according to the obtained SDC value and the probability imaging principle; judging a crack direction based on the SDC value, correcting the SDC value in the crack direction for strengthening the reconstructed image information in the crack direction, and reconstructing a crack damage image by adopting the probability imaging principle; and drawing an SDC distribution map, and evaluating the length of the crack based on the SDC distribution map.

7. The system according to claim 6, **characterized in that**
a plurality of piezoelectric sensors are arranged in a honeycomb array comprising at least one regular hexagonal basic detection unit; and each piezoelectric sensor is a node in the honeycomb array and serves as a loading point of excitation signals and/or an acquisition point of response signals;
the basic detection unit comprises six piezoelectric sensors arranged in a regular hexagon; and
a microcontroller is embedded in the piezoelectric sensor, and the piezoelectric sensor is used as a Lamb wave excitation signal device and a Lamb wave signal receiver.

8. The system according to claim 6, **characterized in that**
the damage information acquisition module is used for analyzing the second Lamb wave response signal in the time domain and the frequency domain by adopting the wavelet transform algorithm, and extracting the characteristic information for measuring actual propagation time and speed of the Lamb wave in the detection structure to be detected.

9. The system according to claim 6, **characterized in that**
the damage information acquisition module is used for taking the first Lamb wave response signal as a base signal and subtracting the second Lamb wave response signal from the first Lamb wave response signal to obtain a damage scattering signal; and superposing and amplifying the damage scattering signal energy by a focusing method to improve the signal-to-noise ratio of the damage scattering signal, and subjecting the damage scattering signal to time reversal processing.

10. The system according to claim 6, **characterized in that**
the second signal excitation module is used for carrying out the time reversal processing on the second Lamb wave response signal containing defect information, and loading the processed second Lamb wave response signal as a new wave source to the loading point of excitation signals for emission, so as to excite an excitation signal on the detection structure to be detected, realize secondary focusing of the Lamb wave at a defect position, and establish an amplitude focusing map for imaging and identifying a damage position and region.
